(19) **Europäisches Patentamt**

**European Patent Office**

**Office européen des brevets**

(11) **EP 0 817 418 B1**

(12) **EUROPEAN PATENT SPECIFICATION**

(45) Date of publication and mention
of the grant of the patent:
**21.01.2004  Bulletin 2004/04**

(51) Int Cl.⁷: **H04L 5/06**

(21) Application number: **97110233.0**

(22) Date of filing: **23.06.1997**

(54) **Method for the frequency correction of multicarrier signals and related apparatus**

Verfahren zur Frequenzkorrektur von Mehrträgersignalen und zugehörige Vorrichtung

Méthode de correction de fréquence de signaux à porteuses multiples et dispositif à cet effet

(84) Designated Contracting States:
**DE FR GB IT**

(30) Priority: **05.07.1996  EP 96110862**

(43) Date of publication of application:
**07.01.1998  Bulletin 1998/02**

(73) Proprietor: **DEUTSCHE THOMSON-BRANDT GMBH**
**78048 Villingen-Schwenningen (DE)**

(72) Inventors:
 • **Klank, Otto**
**31275 Lehrte (DE)**

 • **Madeleine, Dominique**
**30451 Hannover (DE)**

(74) Representative: **Hartnack, Wolfgang, Dipl.-Ing.**
**Deutsche Thomson-Brandt GmbH**
**European Patent Operations**
**Karl-Wiechert-Allee 74**
**30625 Hannover (DE)**

(56) References cited:
**EP-A- 0 441 730          EP-A- 0 656 706**

**Description**

The present invention relates to the frequency correction of multicarrier signals and to a corresponding apparatus, especially for controlling the local timing oscillator in a OFDM receiver.

Background

Various methods for terrestrial transmission of digital broadcast signals are known, having modulation types like OFDM, QPSK and QAM. Examples for such broadcast signals are DVB (digital video broadcast), HDTV-T (hierarchical digital television transmission) and DAB (digital audio broadcast) signals.

At the OFDM method (Orthogonaly Frequency Division Multiplexing) the transmitted signal includes a multiplicity of modulated carriers. These carriers are separated in the receiver by means of a Fast Fourier Transformation (FFT). Before being transposed in the frequency domain, the analog signal must be sampled. For this purpose a local oscillator controls the timing in front of the FFT. Oscillator imperfections (jitter, frequency offset) can degrade the accuracy of the sampling operation and therefore introduce intercarrier interferences after the FFT. The Automatic Frequency Control processing (AFC) and the Common Phase Error Estimation processing (CPEE) are suited to give estimates of the frequency errors in order to correct the oscillator imperfections.

Invention

It is one object of the invention to disclose a method which allows to reduce frequency deviations and jitter of multicarrier signals. This object is reached by the inventive method disclosed in claim 1.

It is a further object of the invention to disclose an apparatus which utilises the inventive method. This object is reached by the apparatus disclosed in claim 6.

The AFC process has the advantage that it can detect large frequency deviations up to 20 times the carrier spacing. But it can be performed only once per block, which is delimited by two consecutive reference symbols. Its result is available after a large processing delay of approximatively 18 symbols. Therefore, it cannot be used to correct the jitter of the oscillator. Furthermore, it leaves offsets which can degrade considerably the performances for the sensitive layers.

The CPEE process on the other hand provides a good accuracy because a filtering of the noise over a large number of pilot cells is performed. It can be performed for each symbol and therefore allows to detect oscillator jitter. The result is available after a delay of 4 symbols. But, because the CPEE is based on phase comparisons, it cannot handle large frequency deviations. A rotation of $\pm\pi$ between two symbols is the maximum theoritical value.

Therefore, according to the invention both methods are combined in a feedback loop, in which the AFC is used to correct the frequency offset at initialisation and the CPEE to correct the remaining deviation and the jitter after the initialization. This allows to remove a large part of the frequency deviations and of the low-frequency components of the local oscillator jitter without introducing any significant phase noise.

In principle, the inventive method for the frequency correction of multicarrier signals consists of a feedback control loop in which a first and a second process for estimation and/or correction of the carrier frequency deviation is performed, wherein the first process treats frequency deviations in the order of several carrier spacings and the second process treats frequency deviations in the order of a fraction of the carrier spacing.

Advantageously between the first and second process is switched over in dependance of a threshold value.

Advantageously the first and second process of the frequency deviation estimation are performed after separation of the various carriers of the multicarrier signal and the results are used to correct the baseband signal in front of the carrier separation.

Furthermore the multicarrier signal can be an OFDM signal comprising CAZAC-Sequences, M-Sequences and pilot cells, and in the first process CAZAC-Sequences and M-Sequences are investigated, which are distributed in the reference symbols of the OFDM signal, and in the second process the frequency deviation is estimated by averaging the phase variation over the pilot cells.

It is of advantage that the feedback control loop performs the following steps:

- when the first process is switched on, the second process is switched off during a whole block;
- during the following block it is switched between the first process and the second process;
- at the end of that block the second process is reinitialized;
- after reinitialization the second process is switched on and the first process is switched off.

In principle the inventive apparatus for the frequency correction of multicarrier signals, consists of that in a feedback control loop a first and a second unit for estimation and/or correction of the carrier frequency deviation are comprised, wherein the first unit treats frequency deviations in the order of several carrier spacings and the second unit treats frequency deviations in the order of a fraction of the carrier spacing.

Advantageously the feedback control loop further comprises a multiplier for modulation of the multicarrier signal, a Fast Fourier Transformation unit for separation of the various carriers of the multicarrier signal, whereby the signal of separated carriers is supplied to the first and second unit for estimation and/or correction of the carrier frequency deviation, the outputs of said first and second unit are fed to a local oscillator and the output signal of the local oscillator is fed to the multiplier.

Drawings

Preferred embodiments of the invention are described with reference to the accompanying drawings, which show in:

Fig. 1     a time (a) and transition diagram (b) of the inventive process;
Fig. 2     a block-diagram of the inventive feedback loop;
Fig. 3     the convergence of the CPEE with and without reinitialization;
Fig. 4     results of the CPEE with different frequency deviations;
Fig. 5     the frequency jitter reduction for different values of $Kf_2$;
Fig. 6     a block diagram of a receiver according to the invention.

Preferred embodiments

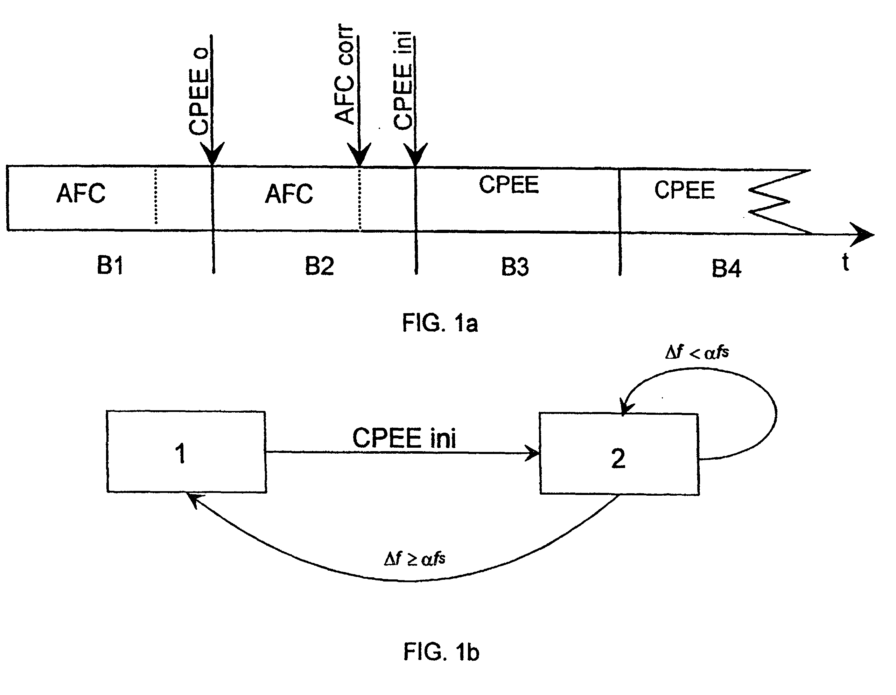

A time and transition diagram of the processing is shown in Fig. 1a and 1b, respectively. In Fig. 1a each block B1, B2, B3, ... consists of 25 symbols. The AFC result is available only after. a large delay of about 18 symbols and there is no way to predict it. Therefore, it has to be waited for the following block B2 before switching on the AFC and to switch off the CPEE during that block (marked in the figure by CPEEo). This yields a one block delay for switching on the AFC. At the end of that block, it is better to reinitialize the CPEE (marked in the figure by CPEEini) to rely upon relevant values from the beginning and avoid convergence time. For the following blocks B3, B4 the CPEE correction is performed.

The transitions between APC and CPEE are shown in Fig. 1b. Initially the processing is in state 1, perfoming the AFC. After initialization the CPEE must be switched on, the AFC must be switched off, symbolized by state 2. The AFC result is then compared to a threshold value $\alpha f_s$. Whether it is smaller or larger than the validity limit of the CPEE, the processing remains either in state 2 or turns back to state 1, performing the AFC processing for the next block.

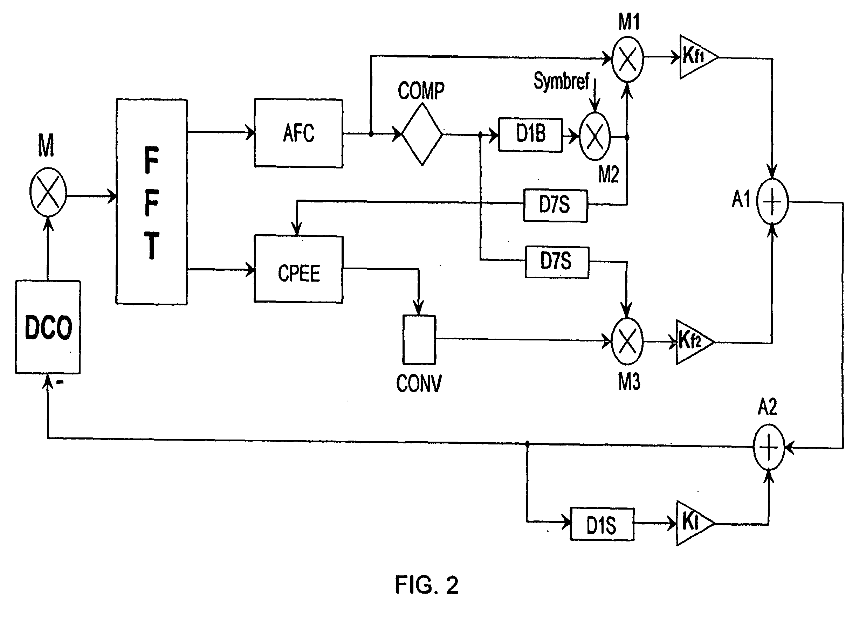

A principle block-diagram of the feedback loop structure according to the invention is shown in figure 2. Digital data are fed to a Fast Fourier Transformation FFT, which separates the different carriers. The output of the FFT is fed to the AFC and CPEE processing units. For the AFC processing the so-called CAZAC-Sequences and M-Sequences, distributed in the reference symbols of the OFDM signal, are investigated. At the CPEE processing the frequency deviation is estimated by averaging the phase variation over the pilot cells. The AFC result is compared to a threshold value $\alpha f_s$ in unit COMP, yielding the values 0 or 1. The resulting value is delayed by one block in D1B and multiplied in M2 either with Symbref = 1, if there is a reference symbol or with Symbref = 0, if there is no reference symbol. The multiplication result of M2 is used for two purposes. First it is fed to a further multiplication unit M1, where it is multiplied with the original AFC result. The result of M1 then is scaled in unit Kf1 and fed to the Adder A1. Secondly the multiplication result is delayed by seven symbols in D7S and is fed to the CPEE unit for initialization. The result of the CPEE, which is a phase-error estimation, is then converted into an equivalent frequency deviation in the converter CONV. The converted result is fed to the multiplier M3, where it is multiplied with the result of the comparator COMP, delayed by seven symbols in D7S. The result of M3 is scaled in Kf2 and also fed to the adder A1. The multipliers M1 and M3 together with the adder A represent a switching function, passing either the result of the AFC process or that of the CPEE process, depending on the result of the comparison in COMP. The result of A1 is filtered at the end of the loop in an IIR filter, which is built up by a delay D1S, amplifier KI and adder A2 to maintain the preceeding correcting value. The corrected signal is fed to a digital controlled oscillator DCO in front of the FFT, which is used for modulation of the new incoming sampled data by the modulator M.

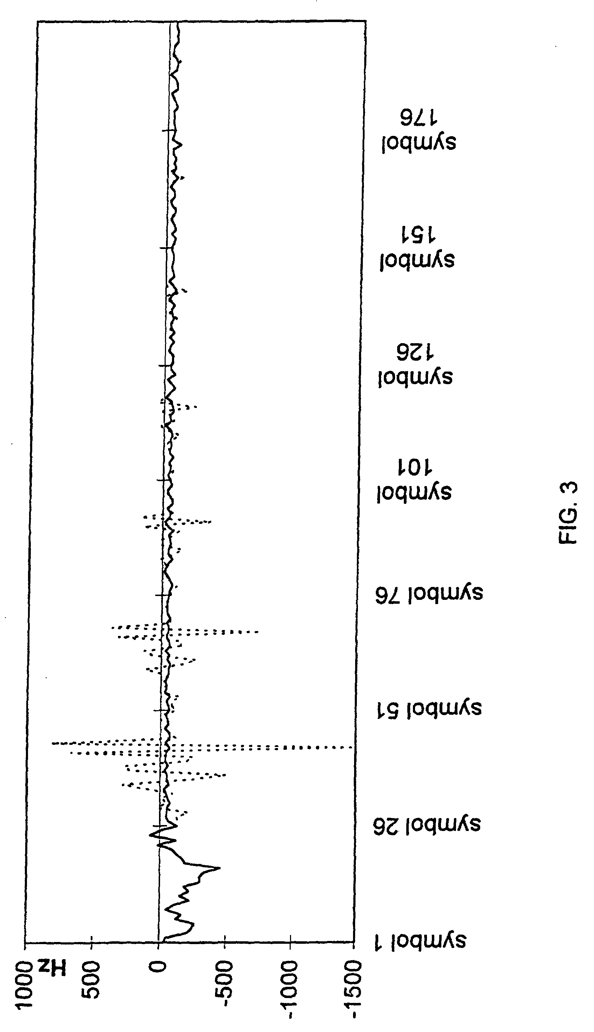

Fig. 3 shows the convergence of the CPEE with and without reinitialization for parameters as used for the following simulations. The reinitialization occurs at the 26th symbol S26. As can be seen, the algorithm needs a few blocks of about 4 and 5 blocks to converge if it is not reinitialized (broken line). This roughly corresponds to a duration between 30 and 40 ms. This time delay is not needed, if reinitialization is used (full line).

Particularly suited values of the parameters will be defined in the following and have been determined by means of simulations.

In the simulations, the AFC can always correct the rough deviation in one step and do not need to be switched on several times consecutively. However, there may be conditions where one AFC correction step is not sufficient. In that case, a second structure can be defined to enable the AFC to stay in the state ON.

The theoretical limit of the CPEE corresponds to a rotation of the carriers of $\pi$ during the symbol length. In the case of a 2K OFDM, with a 1/4 guard interval, it corresponds to a limit of 1562.5 Hz. Because of the presence of noise, the domain of validity in real conditions is smaller than that limit value. Simulations have been performed to evaluate it.

Parameters of the simulations:

- 2K OFDM, guard interval 1/4;
- Rice channel (k=10, SNR=23,5dB) and Rayleigh channel (SNR=8,5dB);
- common phase noise;
- constant frequency deviation.

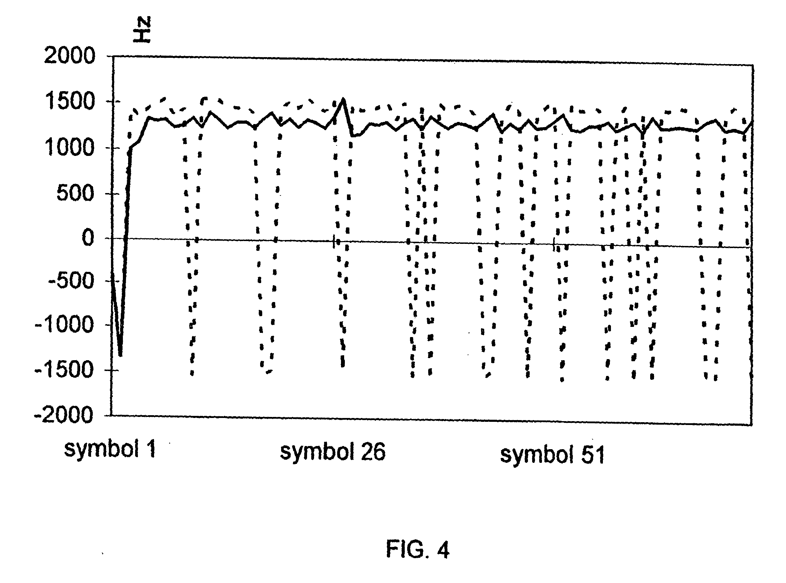

The results in both channels are shown in figure.4. With a frequency deviation of 1300 Hz (full line), the common phase estimates are always relevant and could be fed back to the DCO. The small variations of the estimates are due to the phase noise and to the additive gaussian noise. With 1500 Hz (broken line) due to the near theoretical limit the algorithm cannot distinguish between a positive and a negative frequency deviation. According to that results, a value of $\alpha$=0.2, which corresponding to about 800Hz, is a reasonable threshold.

The AFC presents the advantage of having finished its correction before the next reference symbol goes through the FFT. That means the deviation can be corrected in one step without any risk of instability. A coefficient $Kf_1$=1 can be used and ensure the rapidity of the correction.

As the correction occurs with a delay of 4 symbols, the choice of a too large coefficient $Kf_2$ can cause instability of the system. This is shown with the following theoritical calculations:

At time k, let

$x(k)$     be the frequency deviation of the DCO,
$C(k)$     be the correction,
$y(k)$     be the corrected frequency,
$\tilde{y}(k)$     the estimation of $y(k)$ (from the CPEE).

$\tilde{y}(k-4)$ is fed back to the DCO and the following equations can be writen:

$$C(k)=K_1*C(k-1)-Kf_2*\tilde{y}(k-4)$$

$$y(k)=x(k)+C(k)$$

which yields:

$$y(k)-x(k)=K_1*y(k-1)-K_1*x(k-1)-Kf_2*\tilde{y}(k-4)$$

If a perfect estimation of the CPEE is assumed, the following equation of a 4th order IIR filter is obtained:

$$y(k)-x(k)=K_I*y(k-1)-K_I*x(k-1)-Kf_2*y(k-4)$$

The Laplace transform of the IIR filter is the following:

$$H(Z)=\frac{1-K_I\times Z^{-1}}{1-K_I\times Z^{-1}+Kf_2\times Z^{-4}}$$

The system is stable if the amplitude of each zero is smaller than 1. When KI is close to 1, it corresponds to a limit value of $Kf_2\cong0.44$. The chosen value $Kf_2$ should be smaller than that limit value to provide a decay factor.

The feedback loop relies upon an estimation of the frequency deviation that is based on noise-affected signals and introduces therefore additive phase noise. Low values of $Kf_2$ can reduce the power of that phase noise but will limit the correction to the very low frequencies of the frequency jitter. A compromise between those two phenomena must be found.

This compromise can be found by simulations of the response of the system with different values of $Kf_2$ and different jitters. The jitters that are been used are composed of two frequencies $fm_1$ and $fm_2$. The frequency deviation $\Delta f(t)$ can be written as follows:

$$\Delta f(t) = h_1 \times cos(2\pi fm_1 t) + h_2 \times cos(2\pi fm_2 t)$$

with the following sets of values (in Hz):

- $fm_1=1$, $h_1=48$, $fm_2=4$, $h_2=16$
- $fm_1=10$, $h_1=48$, $fm_2=40$, $h_2=16$
- $fm_1=20$, $h_1=48$, $fm_2=80$, $h_2=16$

parameters of the simulations:

- 2K OFDM, guard interval 1/4;
- Rice channel (k=10, SNR=23,5dB) and Rayleigh channel (SNR=8,5dB).

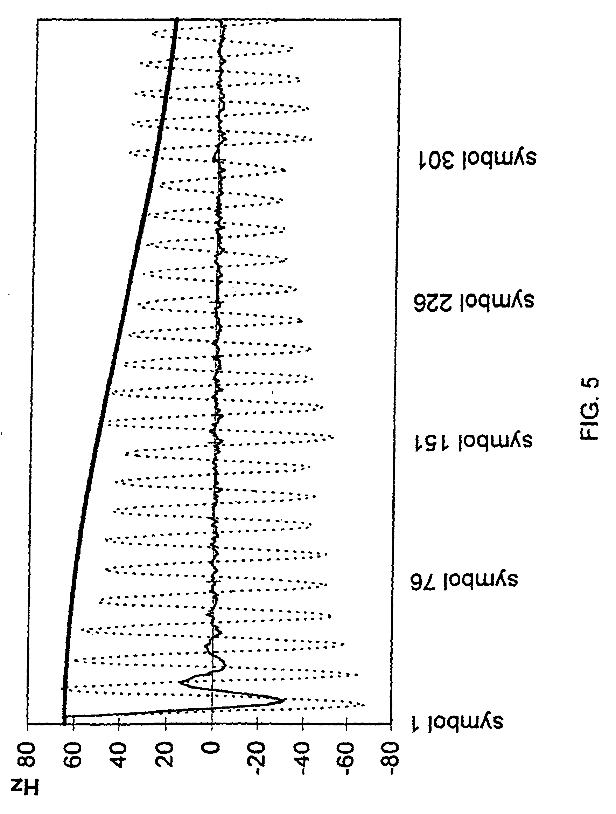

Typical results are shown in figure 5 in comparison with the non-corrected behaviour (thick full line). According to the previous, a too large value of Kf2 produces instability and does not ensure the convergence of the system. The simulation gives a limit value around 0.4 (broken line). For smaller values such as 0.25 (thin full line), there is no problem of stability. The phase noise introduced by the loop does not bring much degradation of the results, even for large values of Kf2. For example, for Kf2=0.3, the corresponding degradations are in both cases less than 0,05dB. Simulations have also shown that frequencies up to 30 Hz are removed. Therefore, a suited value is Kf2=0,3, which corresponds to one of the largest possible values without any risk of instability.

A value very close to one had to be chosen for the Coefficient Kl. The simulations have been performed with 0.99995 which gives good results.

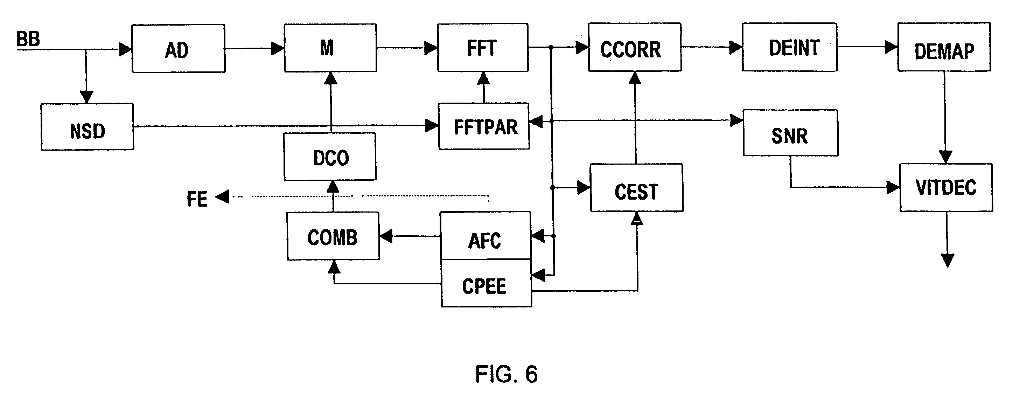

The blockdiagram of a possible OFDM receiver according to the invention is shown in figure 6. The front-end FE and source decoding parts are left out in order to enhance clarity. After a lowpass filtering the baseband signal BB is converted by means of a Analog-to-Digital converter AD and after modulation by the complex multiplier M fed to the FFT unit. To avoid inter-carrier-interferences of the OFDM carriers caused by an incorrect sampling phase, the feedback loop built up by the AFC and CPEE units and the digital controlled oscillator DCO corrects the frequency position of the baseband signal (or generally of the down-converted signal) to a value corresponding with the sampling rate. The FFT process itself is started by a special impulse which is derived by the unit NSD from the null symbol of the OFDM transmission frame. Fine positioning of the FFT is performed by the evaluation of special synchronization symbols. The setting of the FFT window, control of its position and time base are performed by the unit FFTPAR. For channel estimation a known set of reference symbols is compared with the received reference symbols in unit CEST. The estimated values are used to feed the channel correction unit CCORR in the signal processing path, which typically consists of four multipliers in the signal path for correcting amplitude and phase of each carrier. The result is finally successive fed to a deinterleaving unit DEINT, a soft symbol demapper DEMAP and a Viterbi decoder VITDEC, to which also the result of a SNR estimation determined in SNR is supplied.

The invention can be used for transmission, in particular terrestrial transmission, of e.g. digital TV, digital audio or other digital data signals.

## Claims

1. Method for the frequency correction of multicarrier signals, **characterized in that** in a feedback control loop a first (AFC) and a second (CPEE) process for estimation and/or correction of the carrier frequency deviation is performed, wherein the first process (AFC) treats frequency deviations in the order of several carrier spacings and the second process (CPEE) treats frequency deviations in the order of a fraction of the carrier spacing.

2. Method according to claim 1, **characterized in that** between the first (AFC) and second (CPEE) process is switched over in dependance of a threshold value ($\alpha f_s$).

3. Method according to claim 1 or 2, **characterized in that** the first (AFC) and second (CPEE) process are performed after separation of the various carriers of the multicarrier signal and the results are used to correct the baseband signal in front of the carrier separation.

4. Method according to any of claims 1 to 3, **characterized in that** the feedback control loop performs the following steps:

   - when the first process (AFC) is switched on, the second process(CPEE) is switched off during a whole block (B1);
   - during the following block (B2) it is switched between the first process(AFC) and the second process(CPEE);
   - at the end of that block (B2) the second process (CPEE) is reinitialized;
   - after reinitialization the second process (CPEE) is switched on and the first process(AFC) is switched off.

5. Method according to any of claims 1 to 4, **characterized in that** the multicarrier signal is an OFDM signal comprising CAZAC-Sequences, M-Sequences and pilot cells, and in the first process (AFC) CAZAC-Sequences and M-Sequences are investigated, which are distributed in the reference symbols of the OFDM signal, and in the the second process (CPEE) the frequency deviation is estimated by averaging the phase variation over the pilot cells.

6. Apparatus for the frequency correction of multicarrier signals, **characterized in that** a feedback control loop comprises a first (AFC) and a second (CPEE) unit for estimation and/or correction of the carrier frequency deviation wherein the first unit (AFC) treats frequency. deviations in the order of several carrier spacings and the second unit (CPEE) treats frequency deviations in the order of a fraction of the carrier spacing.

7. Apparatus according to claim 6, **characterized in that** the feddback control loop further comprises:

   - a multiplier (M) for modulation of the multicarrier signal;
   - a Fast Fourier Transformation unit (FFT) for separation of the various carriers of the multicarrier signal, whereby the signal of the separated carriers is supplied to the first (AFC) and second (CPEE) unit for estimation and/ or correction of the carrier frequency deviation;
   - a local oscillator (DCO), the output of which depends on the result of said first (AFC) and second (CPEE) unit and is fed to the multiplier (M).

**Patentansprüche**

1. Verfahren zur Frequenzkorrektur von Mehrträgersignalen, **dadurch gekennzeichnet, dass** in einer Rückkopplungs-Regelschleife ein erster (AFC) und ein zweiter (CPEE) Prozess zur Abschätzung und/oder Korrektur der Trägerfrequenz-Abweichung ausgeführt wird, wobei der erste Prozess (AFC) Frequenzabweichungen in der Größenordnung von mehreren Trägerabständen behandelt und der zweite Prozess (CPEE) Trägerfrequenzabweichungen in der Größenordnung von einem Bruchteil des Trägerabstandes behandelt.

2. Verfahren nach Anspruch 1, **dadurch gekennzeichnet, dass** zwischen dem ersten (AFC) und dem zweiten (CPEE) Prozess in Abhängigkeit von einem Schwellwert ($\alpha f_s$) umgeschaltet wird.

3. Verfahren nach Anspruch 1 oder 2, **dadurch gekennzeichnet, dass** der erste (AFC) und der zweite (CPEE) Prozess nach Trennung der verschiedenen Träger des Mehrträgersignals ausgeführt wird und die Ergebnisse dazu verwendet werden, das Basisband-Signal vor der Trägertrennung zu korrigieren.

4. Verfahren nach einem der Ansprüche 1 bis 3, **dadurch gekennzeichnet, dass** die Rückkopplungs-Regelschleife die folgenden Schritte ausführt:

   - wenn der erste Prozess (AFC) eingeschaltet wird, wird der zweite Prozess (CPEE) während eines ganzen Blocks (B1) ausgeschaltet;
   - während des folgenden Blocks (B2) wird zwischen dem ersten Prozess (AFC) und dem zweiten Prozess (CPEE) umgeschaltet;
   - am Ende dieses Blocks (B2) wird der zweite Prozess (CPEE) re-initialisiert;
   - nach Re-Initialisierung wird der zweite Prozess (CPEE) eingeschaltet und der erste Prozess (AFC) ausgeschaltet.

**5.** Verfahren nach einem der Ansprüche 1 bis 4, **dadurch gekennzeichnet, dass** das Mehrträgersignal ein OFDM-Signal ist, das CAZAC-Sequenzen, M-Sequenzen und Pilotzellen umfasst, und dass in dem ersten Prozess (AFC) CAZAC-Sequenzen und M-Sequenzen untersucht werden, die in den Referenz-Symbolen des OFDM-Signals verteilt sind, und dass in dem zweiten Prozess (CPEE) die Frequenzabweichung durch Durchschnittsbildung der Phasenänderung über den Pilotzellen abgeschätzt wird.

**6.** Vorrichtung zur Frequenzkorrektur von Mehrträgersignalen, **dadurch gekennzeichnet, dass** eine Rückkopplungs-Regelschleife eine erste (AFC) und eine zweite (CPEE) Einheit zur Abschätzung und/oder Korrektur der Trägerfrequenz-Abweichung umfasst, wobei die erste Einheit (AFC) Frequenzabweichungen in der Größenordnung von mehreren Trägerabständen behandelt und die zweite Einheit (CPEE) Frequenzabweichungen in der Größenordnung eines Bruchteils des Trägerabstandes behandelt.

**7.** Vorrichtung nach Anspruch 6, **dadurch gekennzeichnet, dass** die Rückkopplungs-Regelschleife ferner umfasst:

- einen Multiplizierer (M) zur Modulation des Mehrträgersignals;
- eine Einheit (FFT) für eine schnelle FourierTransformation zur Abtrennung der mehreren Träger des Mehrträgersignals, wobei das Signal der abgetrennten Träger der ersten (AFC) und der zweiten (CPEE) Einheit zur Abschätzung und/oder Korrektur der Trägerfrequenz-Abweichung zugeführt wird;
- einen örtlichen Oszillator (DCO), dessen Ausgang von dem Ergebnis der ersten (AFC) und der zweiten (CPEE) Einheit abhängt und dem Multiplizierer (M) zugeführt wird.

## Revendications

**1.** Méthode de correction de fréquence de signaux à porteuses multiples, **caractérisée en ce que** dans une boucle de commande à rétroaction un premier processus (AFC) et un second processus (CPEE) d'estimation et/ou de correction de déviation de fréquence de porteuse sont effectués, le premier processus (AFC) traitant des déviations de fréquence de l'ordre de plusieurs espacements de porteuses et le second processus (CPEE) traitant des déviations de fréquence de l'ordre d'une fraction de l'espacement de porteuses.

**2.** Méthode selon la revendication 1, **caractérisée en ce que** l'on passe du premier processus (AFC) au second processus (CPEE) en fonction d'une valeur de seuil ($\alpha f_s$).

**3.** Méthode selon la revendication 1 ou 2, **caractérisée en ce que** le premier processus (AFC) et le second processus (CPEE) sont effectués après la séparation des diverses porteuses du signal à porteuses multiples et les résultats sont utilisés pour corriger le signal de bande de base avant la séparation de porteuses.

**4.** Méthode selon l'une des revendications 1 à 3, **caractérisée en ce que** la boucle de commande à rétroaction effectue les étapes suivantes :

- lorsque le premier processus (AFC) est mis en service, le second processus (CPEE) est mis hors service durant un bloc entier (B1) ;

- durant le bloc suivant (B2), on passe du premier processus (AFC) au second processus (CPEE) ;

- à la fin de ce bloc (B2), le second processus (CPEE) est réinitialisé ;

- après la réinitialisation, le second processus (CPEE) est mis en service et le premier processus (AFC) est mis hors service.

**5.** Méthode selon l'une des revendications 1 à 4, **caractérisée en ce que** le signal à porteuses multiples est un signal OFDM comprenant des séquences CAZAC, des séquences M et des cellules pilotes, et dans le premier processus (AFC), des séquences CAZAC et des séquences M, réparties dans les symboles de référence du signal OFDM, sont examinées, et dans le second processus (CPEE), la déviation de fréquence est évaluée en faisant la moyenne de la variation de phase des cellules pilotes.

**6.** Dispositif de correction de fréquence de signaux à porteuses multiples, **caractérisé en ce qu'**une boucle de commande à rétroaction comprend une première unité (AFC) et une seconde unité (CPEE) d'estimation et/ou de correction de déviation de fréquence de porteuse, la première unité (AFC) traitant des déviations de fréquence de l'ordre de plusieurs espacements de porteuses et la seconde unité (CPEE) traitant des déviations de fréquence de l'ordre d'une fraction de l'espacement de porteuses.

**7.** Dispositif selon la revendication 6, **caractérisé en ce que** la boude de commande à rétroaction comprend en outre :

- un multiplicateur (M) pour la modulation du signal à porteuses multiples ;

- une unité de transformation de Fourier rapide (FFT) pour la séparation des différentes porteuses du signal à porteuses multiples, le signal des porteuses séparées étant fourni à la première unité (AFC) et à la seconde unité (CPEE) d'estimation et/ou de correction de la déviation de fréquence de porteuse ;

- un oscillateur local (DCO), dont la sortie dépend du résultat de ladite première unité (AFC) et de ladite seconde unité (CPEE) et est fournie au multiplicateur (M).

FIG. 1a

FIG. 1b

EP 0 817 418 B1

FIG. 2

EP 0 817 418 B1

FIG. 3

FIG. 4

EP 0 817 418 B1

FIG. 5

FIG. 6

EP 0 817 418 B1